# EUROPEAN PATENT SPECIFICATION

(11) **EP 3 798 275 B1**
(45) Date of publication and mention of the grant of the patent: **13.07.2022**
(21) Application number: 20194430.3
(22) Date of filing: 03.09.2020
(51) Int. Cl.: C09D 11/322, C09D 11/38

(54) **CERAMIC INK AND USE THEREOF FOR DECORATING CERAMIC OBJECTS**
KERAMISCHE TINTE UND IHRE VERWENDUNG ZUM DEKORIEREN VON KERAMISCHEN GEGENSTÄNDEN
ENCRE EN CÉRAMIQUE ET SON UTILISATION POUR LA DÉCORATION D'OBJETS EN CÉRAMIQUE

(30) Priority: 26.09.2019 IT 201900017318
(43) Date of publication of application: 31.03.2021
(73) Proprietor: SMALTICERAM UNICER S.P.A., 42014 Castellarano (RE) (IT)
(72) Inventor: GARZONI, Dario, 42031 BAISO (RE) (IT)
(74) Representative: Corradini, Corrado

(56) References cited:
- WO-A1-2016/110724
- CN-A- 106 009 926
- US-A1- 2016 280 588

## Description

### Technical Field

The present invention relates to a ceramic ink and a method for decorating ceramic objects using said ceramic ink.

More in particular, the present invention relates to a ceramic ink intended to be applied with digital inkjet ceramic printers.

### Prior art

As is known, the manufacturing process for most ceramic objects, such as ceramic tiles and slabs, generally envisages providing a mass of ceramic powders, which is subsequently compacted through a ceramic press, decorated on the surface and finally subjected to a firing step at high temperature in a ceramic kiln.

One of the currently most common techniques for performing the mentioned decoration step is the one which envisages applying ceramic inks through the use of digital printers that exploit inkjet technology.

These ceramic inks commonly consist of a suspension comprising a water-based or organic liquid fraction (also known as the carrier) and an inorganic solid fraction, which is finely ground and dispersed in the liquid fraction.

The solid fraction can comprise, for example, coloured calcines and inorganic pigments, adapted to give the ceramic ink the desired colour, to which frits of various kinds and/or other inorganic oxides of varying refractory properties can possibly be added, in order to obtain on the ceramic object various material effects, including the glossy effect, the devitrified effect, the matt effect, the metallic effect, the sinking effect and the like.

In relation to the liquid fraction, the main organic components currently used in ceramic inks may be grouped into the following classes of organic substances: glycols, glycol ethers, esters derived from fatty acids, paraffins and naphthenes.

However, these organic substances have the drawback of releasing pollutants into the atmosphere, during the subsequent firing step, including aldehydes and aldehyde compounds, formaldehyde, volatile organic substances (VOS) and odorous substances, which significantly increase the environmental impact of the decoration processes that envisage the use of inkjet ceramic printers.

In particular, odorous substances now represent a very common problem, as the unpleasant odour is perceived by the population living near ceramic industrial centres.

### Disclosure of the invention

In light of the above, an object of the present invention is that of providing a family of ceramic inks and a corresponding method for decorating ceramic objects, which enable the emissions of pollutants during the firing step to be substantially reduced, in particular in relation to emissions of volatile organic substances, aldehydes and aldehyde compounds (e.g. formaldehyde) and odorous substances.

A further aim of the present invention is that of reaching the aforesaid objective within the context of a simple, rational and relatively cheap solution.

These and other objects are reached by the characteristics of the invention as set forth in the independent claims.

The dependent claims outline preferred and/or particularly advantageous aspects of the invention.

In particular, an embodiment of the present invention makes available a ceramic ink comprising (for example consisting of) a suspension formed by a solid inorganic fraction dispersed in a liquid organic fraction, wherein the liquid organic fraction comprises:
a first component consisting of an ester derived from benzoic acid or from a mixture of esters derived from benzoic acid, and/or
a second component consisting of an ester derived from phenoxyethanol alcohol or a mixture of esters derived from phenoxyethanol alcohol.

Thanks to the use of one or both of these components in the liquid organic fraction, it was advantageously possible to obtain ceramic inks having suitable characteristics to be applied using digital inkjet printers and that at the same time, during the ceramic object firing step, have the important effect of releasing significantly reduced organic volatile substances, aldehydes and relative compounds, formaldehyde and odorous substances. This effect is generally due to the fact that, during the firing step of the ceramic object, the esters derived from benzoic acid and the esters derived from phenoxyethanol alcohol have different combustion methods with respect to the liquid carriers in current ceramic inks, producing a lower amount of pollutants.

For example, experimental tests have indicated that esters derived from benzoic acid generate more energetic and rapid combustion with respect for example to esters derived from fatty acids, therefore more inclined to take place completely, producing CO₂ rather than intermediate organic compounds.

According to an aspect of the present invention, the ester(s) of benzoic acid that constitute(s) the first component of the liquid organic fraction may be selected from the group consisting of:
- dodecyl benzoate,
- butyl benzoate,
- propyl benzoate,
- ethyl benzoate,
- methyl benzoate,
- 3,7-dimethyl-1,6-octadien-3-yl benzoate,
- 2-phenylethyl benzoate,
- phenyl benzoate,
- benzyl benzoate.

These esters derived from benzoic acid can be easily found on the market and are all suitable to be used in the composition of a ceramic ink having the advantages previously mentioned.

However, it is highlighted that the ester of benzoic acid for which it was possible to find the most significant results is dodecyl benzoate (CAS Number 68411-27-8; Benzoic acid, C12-15-alkyl esters), which therefore represents a preferred choice.

Another aspect of the invention envisages that the first component may be present in the ceramic ink in a quantity by weight comprised between 10% and 90% of the total weight of the ceramic ink itself (including extremes), and/or comprised between 25% and 100% of the weight of the liquid organic fraction (including extremes).

In this way, the first component is a significant part of the liquid organic fraction of the ceramic ink, enabling just as significant a reduction in pollutants to be achieved. According to another aspect of the present invention, the ester(s) of phenoxyethanol alcohol that constitute(s) the second component of the liquid fraction may be selected from the group consisting of:
- phenoxyethyl ester,
- 1-phenoxyethyl acetate,
- 1-phenoxyethyl acrylate,
- 2-phenoxyethyl octanoate,
- 2-phenoxyethyl propionate,
- 2-phenylethyl 2-methylpropanoate.

These esters derived from phenoxyethanol alcohol can also be easily found on the market and are all suitable to be used in the composition of a ceramic ink having the advantages previously mentioned.

However, it is highlighted that the ester of phenoxyethanol alcohol for which it was possible to achieve the most significant results is phenoxyethyl ester, which therefore represents a preferred choice.

Another aspect of the invention envisages that the second component may be present in the ceramic ink in a quantity by weight comprised between 10% and 90% of the total weight of the ceramic ink itself (including extremes), and/or comprised between 25% and 100% of the weight of the liquid organic fraction (including extremes).

In this way, the second component is a significant part of the liquid organic fraction of the ceramic ink, enabling just as significant a reduction in pollutants to be achieved. However, it is specified that the percentage by weight of the first and/or of the second component of the liquid organic fraction of the ceramic ink may be regulated on the basis of the physical parameters required by manufacturers of digital inkjet ceramic printers. In fact, on this point, it is specified that, in order to be able to work in an optimal way in the main digital inkjet ceramic printers, it is generally preferable for the ceramic ink to have predefined viscosity, density and surface tension values.

For this and/or other reasons, the ceramic ink can comprise further substances and/or chemical additives.

In particular, an aspect of the invention envisages that, in addition to the first component and/or the second component mentioned above, the liquid organic fraction of the ceramic ink may possibly comprise an additional component comprising a substance or a mixture of substances selected from the group consisting of:
- glycols,
- glycol ethers,
- esters deriving from fatty acids,
- paraffins,
- naphthenes.

These substances can act as viscosity regulators and/or lubricants, in order to confer to the ceramic ink a more suitable viscosity for the needs of digital inkjet ceramic printers.

According to an aspect of the invention, the aforesaid additional component (i.e. the one selected from glycols, glycol ethers, esters deriving from fatty acids, paraffins, naphthenes and mixtures thereof) may be present in the ceramic ink in a quantity by weight less than or equal to 40% of the total weight of the ceramic ink itself.

In this way it is effectively possible to gauge the amount of the additional component in order to obtain the desired effect, without significantly increasing the pollutant emissions. According to another aspect of the invention, the ceramic ink can further comprise one or more chemical additives selected from the group consisting of:
- dispersants,
- suspending agents,
- surfactants,
- defoamers.

Dispersing additives have the function of keeping solid particles separate and therefore preventing clumping.

Suspending additives have the function of reducing the settling of the solid particles. Surfactant additives have the function of regulating the surface tension.

Defoaming additives have the function of reducing the formation of foam and limiting the presence of bubbles and air in the ceramic ink.

An aspect of the present invention envisages that each of the aforesaid chemical additives can be present in a quantity by weight less than or equal to 10% of the total weight of the ceramic ink.

In this way, chemical additives are a minority component of the ceramic ink that does not significantly affect the pollutant emissions.

Now, moving on to the solid inorganic fraction, this solid inorganic fraction can comprise one or more components selected from the group consisting of:
- calcines,
- coloured calcines,
- inorganic pigments,
- frits,
- inorganic oxides,
- refractory inorganic oxides.

By choosing appropriately from these components, it is advantageously possible to produce a wide range of ceramic inks of different colours and/or able to produce on the ceramic objects various material effects, for example a glossy effect, a devitrified effect, a matt effect, a metallic effect, a sinking effect and many others.

According to an aspect of the invention, the solid inorganic fraction may be present in the ceramic ink in a quantity by weight comprised between 5% and 55% (including extremes) of the total weight of the ceramic ink itself.

As the solid inorganic fraction and the liquid organic fraction form a suspension, the solid inorganic fraction is generally comprised of an incoherent mass of solid particles, typically very small, which are dispersed within the liquid organic fraction.

In particular, in order to be able to work in an optimal way in the main digital inkjet ceramic printers, it is preferable for the solid inorganic fraction to be comprised of an incoherent mass of solid particles having an average diameter less than 1.5 µm (micrometres), i.e. the ceramic ink has a particle size distribution D₅₀<1.5 µm.

To obtain these or other characteristics, the ceramic ink can be obtained by performing a first dry grinding of the solid fraction and a subsequent ultra-grinding of the solid fraction after mixing it with the liquid fraction and any chemical additives.

In general terms, the present invention also makes available a method for decorating a ceramic object, which comprises the step of applying to at least one surface of said ceramic object a ceramic ink having the characteristics outlined above.

This embodiment of the invention takes advantage of the innovative ceramic ink for enabling a decoration of the ceramic objects that has a lower environmental impact with respect to the prior art.

According to an aspect of this embodiment, the application of the ceramic ink is preferably performed using a digital ink jet ceramic printer.

In this way, it is advantageously possible to obtain on the ceramic object a large variety of graphics and effects, within the scope of a very versatile solution.

According to an aspect of the invention, the ceramic object on which the ceramic dye is applied may be a raw manufactured artefact of pressed ceramic powders, e.g. with the conformation of a substantially flat layer intended to produce ceramic tiles and/or slabs. The adjective "raw" means that the object made of pressed ceramic powders has not yet been subjected to the firing process inside the kiln and, therefore, that the application of the ceramic dye takes place after a pressing step of the ceramic powders but before the aforesaid firing step in the ceramic kiln.

A further aspect of this embodiment envisages that the method may also comprise a step of applying a ceramic slip to said surface of the ceramic object, before the step of applying the ceramic ink.

This ceramic slip has the function of levelling out the roughness of the surface of the ceramic object, e.g. of the raw manufactured artefact made of pressed ceramic powders, at the same time making the ceramic object less permeable to the ceramic inks that can therefore create more defined graphics on the surface.

Another aspect of this embodiment further envisages that the method can also comprise a step of applying a ceramic coating glaze to said surface of the ceramic object, preferably transparent, after the step of applying the ceramic ink.

This ceramic glaze has the effect of creating a protective layer for the ceramic object and the decoration obtained with the ceramic ink against oxidation, water and acids.

As well as the above, the present invention also extends to the use of the ceramic ink defined above for the decoration of a ceramic object, in particular a raw manufactured artefact of pressed ceramic powders as outlined above.

Another embodiment of the present invention relates to the use of the ceramic ink defined above in a digital inkjet ceramic printer, e.g. for the application of said ceramic ink on a ceramic object, in particular on a raw manufactured artefact of pressed ceramic powders as outlined above.

### Brief description of the drawings

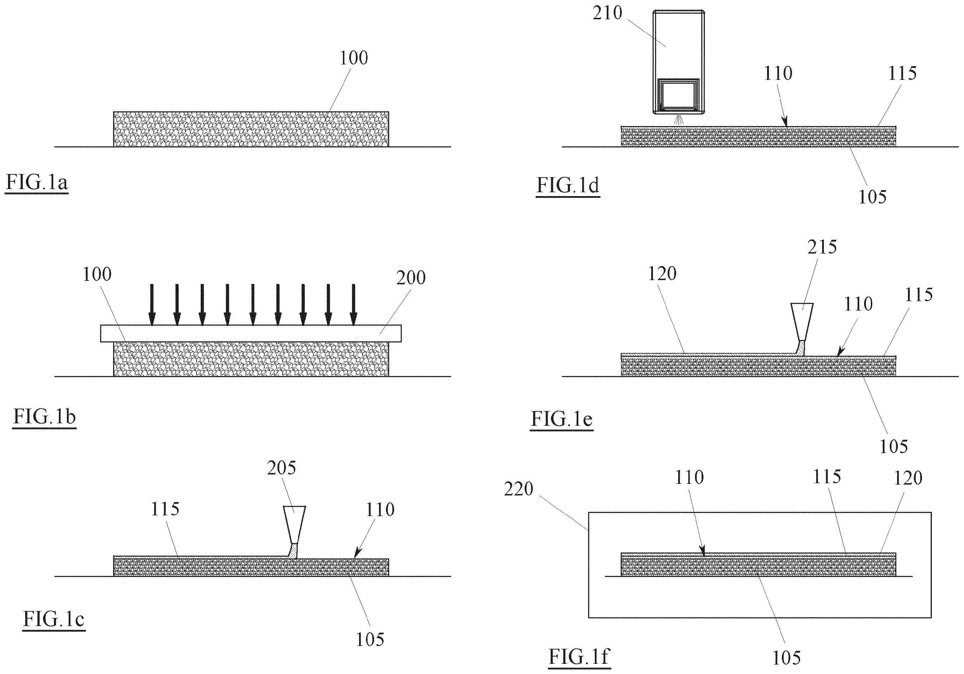

Further characteristics and advantages of the invention shall become clear from the reading of the following description provided by way of non-limiting example, also with the aid of the figures illustrated in the appended table, wherein figures 1a to 1f schematically illustrate the equivalent steps of a process for producing ceramic objects.

### Detailed description

A normal process for producing ceramic objects, such as for example ceramic tiles or slabs, envisages first arranging a soft mass (i.e. unpressed) 100 of ceramic powder, distributing it on a support surface, e.g. in the form of a substantially flat layer of a predefined thickness (see Fig.1a).

The ceramic powder can be obtained by grinding a mixture of raw ceramic materials, including for example clays, talc, silica, feldspar minerals, carbonates, micas, glass materials, etc.

The mixture of raw ceramic materials can be dry-ground, directly obtaining the ceramic powder, or it can be wet-ground and then subjected to a drying process inside an atomiser.

In this second case, the ceramic powder therefore takes the name of "atomized material". Subsequently, the soft mass 100 of ceramic powder is subjected to a pressing step (see Fig.1b), e.g. using a ceramic press 200, which may be of the discontinuous or continuous type, so as to obtain a raw manufactured artefact 105 made of pressed ceramic powder having for example the shape of a slab or a tile (see Fig. 1c).

It is to be specified that in ceramic jargon "raw" manufactured artefact generally means a manufactured artefact of pressed ceramic powder but that has not yet been subjected to a firing process.

The pressure with which the soft mass 100 is pressed can vary according to the ceramic powders used, typically from a minimum of 150 kg/cm² (kilograms per square centimetre) to a maximum of 600 kg/cm².

For example, in the case of porcelain stoneware, the pressure exercised on the soft mass 100 may be comprised between 300 kg/cm² and 450 kg/cm², more preferably 350 kg/cm² and 450 kg/cm².

After pressing, the raw manufactured artefact 105 can possibly be subjected to a drying step, during which it is heated to moderate temperatures inside a dryer in order to reduce the moisture of the pressed ceramic powder.

After this, the raw manufactured artefact 105 of ceramic powder is subjected to a surface decoration process, so as to perform a decoration, e.g. colouring and/or a graphic, on at least one surface 110 thereof.

In particular, the surface to be decorated 110 is generally one of the largest flat faces of the raw manufactured artefact 105 of pressed ceramic powder.

This decoration process can comprise a preliminary step that envisages applying to the surface to be decorated 110 a layer 115 of a ceramic slip (see Fig.1c), which generally has the function of levelling off the roughness of the surface to be decorated 110, at the same time making said surface 110 less permeable to liquids.

The ceramic slip can be applied using an airless applicator 205 or any other suitable device.

The decoration step also envisages applying to the surface to be decorated 110, possibly above the layer 115 of ceramic slip, one or more ceramic inks adapted to produce the desired decoration (see Fig. 1d).

To increase the range of decorations that can be performed and the versatility of the decoration process, these ceramic inks can be applied using one or more digital inkjet ceramic printers 210, i.e. that implement inkjet technology.

Each ceramic ink is generally comprised of a suspension, i.e. of a mixture comprising a finely divided solid material dispersed in another material in the liquid state, typically so as not to settle in a short time.

The solid material present in the solution generally takes the name of solid fraction, whereas the material in the liquid state generally takes the name of liquid fraction or carrier.

In the case of ceramic inks, the solid fraction of the solution is of inorganic nature whereas the liquid fraction is of organic nature.

After the application of the ceramic inks, the surface 110 can possibly be covered with a layer 120 of a coating ceramic glaze (see Fig.1e), preferably transparent, which generally has the effect of protecting the decoration obtained with the ceramic inks against oxidation, water and acids.

The ceramic glaze can be applied using an airless applicator 215 or any other suitable device.

At the end of the decoration step, the raw manufactured artefact 105 of pressed and decorated ceramic powder is subjected to a firing process, typically inside a ceramic kiln 220 (see Fig. 1f), so as to obtain the finished ceramic object.

This firing step generally envisages heating the raw manufactured artefact 105 according to a set heating curve, until it is brought to a predefined maximum temperature, which can vary between 550°C and 1400°C according to the composition of the ceramic powder, and keeping it at said maximum temperature for a determined time, before cooling it. However, the firing step also involves the ceramic inks that were previously applied during the decoration step, the liquid organic fraction of which is therefore subject to combustion and therefore generates gases and/or other volatile substances that are released into the atmosphere, typically through the chimney of the ceramic kiln 220.

To reduce the environmental impact of this combustion process, the present invention makes available a family of ceramic inks which, during the firing step of the raw manufactured artefact 105, are able to release lower quantities of pollutants with respect to the ceramic inks currently in use, especially in relation to emissions of volatile organic substances (VOCs), aldehydes, aldehyde compounds and, in particular, formaldehyde and odorous substances.

Each ceramic ink of this new family has the same general structure as traditional ceramic inks, i.e. it is comprised of a suspension formed by a solid inorganic fraction dispersed in a liquid inorganic fraction.

The solid inorganic fraction is generally comprised of an incoherent mass of solid particles, typically very small, which are dispersed within the liquid organic fraction.

In order to be able to work in an optimal way in the main digital inkjet ceramic printers, it is preferable for the particles of the solid inorganic fraction to have an average diameter less than 1.5 µm (micrometres), so that the ceramic ink has a particle size distribution D₅₀<1.5 µm.

For that purpose, the ceramic ink can be obtained by performing a first dry grinding of the solid fraction and a subsequent ultra-grinding of the solid fraction after mixing it with the liquid fraction and any chemical additives.

Then, entering into more detail, the solid inorganic fraction may comprise one or more components selected from the group consisting of:
- calcines,
- coloured calcines,
- inorganic pigments,
- frits,
- inorganic oxides,
- (more or less) refractory inorganic oxides.

By choosing and possibly appropriately mixing these materials it is in fact possible to produce a wide range of ceramic inks of different colours and/or able to produce on the ceramic objects various material effects, for example a glossy effect, a devitrified effect, a matt effect, a metallic effect, a sinking effect and many others.

In general, the solid inorganic fraction may be present in the ceramic ink in a quantity by weight comprised between 5% and 55% of the total weight of the ceramic ink itself.

Now, passing on to the liquid organic fraction, to reduce the environmental impact of the ceramic ink, the invention envisages that the same comprises one or more components the combustion of which, during the firing step of the ceramic manufactured artefacts, takes place according to methods that enable less polluting and/or odorous substances to be produced with respect to the components currently used.

In particular, an embodiment of the present invention envisages that the liquid organic fraction comprises a first component A comprising an ester derived from benzoic acid. Experimental tests have in fact indicated that esters deriving from benzoic acid generate energetic and rapid combustion, which substantially takes place completely and therefore tends to produce CO₂ rather than intermediate organic compounds.

Preferably, the ester derived from benzoic acid that constitutes the first component A may be:
- dodecyl benzoate (CAS Number 68411-27-8; Benzoic acid, C12-15-alkyl esters). However, it is not excluded that the first component A may be comprised of another ester derived from benzoic acid, including for example:
- butyl benzoate,
- propyl benzoate,
- ethyl benzoate,
- methyl benzoate,
- 3,7-dimethyl-1,6-octadien-3-yl benzoate,
- 2-phenylethyl benzoate,
- phenyl benzoate,
- benzyl benzoate.

Neither is it excluded that the first component A may be comprised of a mixture of two or more esters derived from benzoic acid, e.g. selected from those mentioned above.

Regardless of these considerations, it is envisaged that the first component may be present in the ceramic ink in a quantity by weight comprised between 10% and 90% of the total weight of the ceramic ink itself (including extremes), or comprised between 25% and 100% of the weight of the liquid organic fraction (including extremes).

Another embodiment of the present invention envisages that the liquid organic fraction of the ceramic ink, rather than the component A, can comprise a second component B comprising an ester derived from phenoxyethanol alcohol.

In fact, experimental tests have highlighted that even esters derived from phenoxyethanol alcohol produce, during combustion inside the ceramic kiln, reduced quantities of polluting and/or odorous substances.

Preferably, the ester derived from phenoxyethanol alcohol that constitutes the second component B may be:
- phenoxyethyl ester.

However, it is not excluded that the second component B may be comprised of another ester derived from phenoxyethanol alcohol, including for example:
- 1-phenoxyethyl acetate,
- 1-phenoxyethyl acrylate,
- 2-phenoxyethyl octanoate,
- 2-phenoxyethyl propionate,
- 2-phenylethyl 2-methylpropanoate.

Neither is it excluded that the second component B may be comprised of a mixture of two or more esters derived from phenoxyethanol alcohol, e.g. selected from those mentioned above.

Also in this case, it is envisaged that the second component B may be present in the ceramic ink in a quantity by weight comprised between 10% and 90% of the total weight of the ceramic ink itself (including extremes), or comprised between 25% and 100% of the weight of the liquid organic fraction (including extremes).

A third embodiment of the present invention finally envisages that the liquid organic fraction of the ceramic ink can comprise a mixture of the components A and B outlined above, i.e. a mixture comprising one or more esters derived from benzoic acid and one or more esters derived from phenoxyethanol alcohol.

Also this mixture of components A and B may be present globally in the ceramic ink in a quantity by weight comprised between 10% and 90% of the total weight of the ceramic ink itself (including extremes), or comprised between 25% and 100% of the weight of the liquid organic fraction (including extremes).

However, it is to be highlighted that, in all the embodiments disclosed above, the percentage quantity by weight of the first component A and/or of the second component B in the ceramic ink may be regulated on the basis of the physical parameters required by the main manufacturers of digital inkjet ceramic printers.

In fact, in order to be able to work in an optimal way in digital inkjet ceramic printers, it is generally preferable for the ceramic ink to comply with predefined requirements in terms of viscosity, density and surface tension values.

For example, it may be preferable for the ceramic ink to fulfil one or more of the following conditions:
- viscosity comprised between 23 and 27 cps (centipoise) (including extremes), at an indicative temperature of 25°C;
- viscosity comprised between 13 and 16 cps (including extremes), at an indicative temperature of 45°C;
- density comprised between 900 and 1550 g/l (grams/litre) (including extremes);
- surface tension comprised between 28 and 32 mN/m (millinewton/metre) (including extremes).

For these and/or other reasons, the ceramic ink according to all the embodiments of the invention disclosed above may comprise further substances and/or chemical additives. In particular, the liquid organic fraction of the ceramic ink can further comprise, in addition to the first component A and/or the second component B, also an additional component comprising a substance or a mixture of substances selected from the group consisting of:
- glycols,
- glycol ethers,
- esters deriving from fatty acids,
- paraffins,
- naphthenes.

These substances can act as viscosity regulators and/or lubricants, in order to confer to the ceramic ink a more suitable viscosity for the needs of digital inkjet ceramic printers. By way of example, glycols and glycol ethers can be selected from the group consisting of:
- tripropylene glycol butyl ether (TPnB),
- isomers of tripropylene glycol butyl ether,
- triethylene glycol (TEG),
- dipropylene glycol methyl ether (DPM).

Esters deriving from fatty acids can be selected from the group consisting of:
- 2-ethyl hexyl laurate,
- derivatives of lauric acid,
- bis-(2-ethylhexyl) adipate,
- diisodecyl adipate,
- derivatives of adipic acid,
- 2-ethylhexyl cocoate.

Paraffins and naphthenes can be selected from the group consisting of:
C15-C20 hydrocarbon mixtures,
- n-alkanes,
- isoalkanes,
- cyclics,
- vaseline oil,
- C15-C30 mixtures of cycloalkanes.

Regardless of this, it is preferable for the aforesaid additional component to be present in the ceramic ink in a quantity by weight less than or equal to 40% of the total weight of the ceramic ink itself.

In compliance with all the embodiments of the present invention, the liquid organic fraction of the ceramic ink can further comprise one or more chemical additives selected from the group consisting of:
- dispersing additives: additives having the function of keeping solid particles separate and therefore preventing clumping,
- suspending additives: additives having the function of reducing the settling of the solid particles,
- surfactants: additives having the function of regulating the surface tension,
- defoaming additives: additives having the function of reducing the formation of foam and limiting the presence of bubbles and air in the ceramic ink.

An aspect of the present invention envisages that each of the aforesaid chemical additives can be present in a quantity by weight less than or equal to 10% of the total weight of the ceramic ink.

By way of example, the following tables show some possible formulations of ceramic inks according to the present invention:

| | Example 1 | Example 2 | Example3 |
|---|---|---|---|
| | % w/w | % w/w | % w/w |
| Solids | 5÷55 | 5÷55 | 5÷55 |
| **Component A** | 10÷90 | | 10÷90 |
| **Component B** | | 10÷90 | 10÷90 |
| Glycol ether (TPnB) | 0÷40 | 0÷40 | 0÷40 |
| Ester of fatty acid | | | |
| Dispersing agent/suspending agent | 0,1÷10 | 0,1÷10 | 0,1÷10 |
| Total | 100 | 100 | 100 |

| | Example 4 | Example 5 | Example 6 |
|---|---|---|---|
| | % w/w | % w/w | % w/w |
| Solids | 5÷55 | 5÷55 | 5÷55 |
| **Component A** | 10÷90 | | 10÷90 |
| **Component B** | | 10÷90 | 10÷90 |
| Glycol ether (TPnB) | | | |
| Ester of fatty acid | 0÷40 | 0÷40 | 0÷40 |
| Dispersing agent/suspending agent | 0,1÷10 | 0,1÷10 | 0,1÷10 |
| Total | 100 | 100 | 100 |

| | Example 7 | Example 8 | Example 9 |
|---|---|---|---|
| | % w/w | % w/w | % w/w |
| Solids | 5÷55 | 5÷55 | 5÷55 |
| **Component A** | 10÷90 | | 10÷90 |
| **Component B** | | 10÷90 | 10÷90 |
| Glycol ether (TPnB) | 0÷40 | 0÷40 | 0÷40 |
| Ester of fatty acid | 0÷40 | 0÷40 | 0÷40 |
| Dispersing agent/suspending agent | 0,1÷10 | 0,1÷10 | 0,1÷10 |
| Total | 100 | 100 | 100 |

For each of the examples provided above, the quantity of each component is to be considered comprised between the pair of values (including extremes) which are contained in the corresponding box of the tables that represent a percentage by weight of said component with respect to the total weight of the ceramic ink.

Therefore, for example, the boxes containing the values "10-90" indicate that the corresponding component is present in a quantity by weight comprised between 10% and 90% of the total weight of the ceramic ink (including extremes).

The pairs of values contained in all the other boxes of the tables are naturally to be interpreted in the same way.

The boxes that do not contain any value indicate that the component to which they refer is missing in that specific example of ceramic ink.

As mentioned above "solids" may be comprised of one or more components selected from calcines, coloured calcines, inorganic pigments, frits of various kind and/or more or less refractory inorganic oxides.

To verify the entity of the emissions into the atmosphere of this new family of ceramic inks, experimental tests were performed according to three different methods.

### First test method

As the first test method, the emissions into the atmosphere were measured, caused by the firing step of tiles decorated on a pilot production line provided with a roller ceramic kiln with methanol powered burners and having a length of 25 m.

The tiles were created starting from raw manufactured artefacts of porcelain stoneware, pressed and having dimensions of about 65x65 cm.

The raw manufactured artefacts were introduced onto the pilot line and, after passing through a dryer, they reached an airless applicator at the average temperature of 90-95°C. Through the airless applicator, 350-400 g/m² of a classic slip for porcelain stoneware with density 1500 g/l (grams/litre) were applied to the raw manufactured artefacts.

Subsequently, the raw manufactured artefacts reached a digital inkjet ceramic printer (with Seiko SG 1536L heads) at the temperature of about 65-70°C. The digital inkjet ceramic printer applied 49 g/m² ± 2g of ceramic ink on the entire surface of the raw manufactured artefacts (full field).

Following this, the raw manufactured artefacts reached a second airless applicator at the temperature of 65-70°C. In this step, about 300 g/m² of a classic transparent coating glaze for porcelain stoneware were applied.

Finally the raw manufactured artefacts were sent for firing in the ceramic kiln with a firing curve set so that each tile reached 620°C in 14.8 minutes.

The emissions into the atmosphere during this firing step were characterized by performing the following analyses:
- Cubic metres per hour, Temperature - UNI EN ISO 16911-1 Annex A:2013
- Oxygen (02) - UNI EN 14789:2017
- Water vapour - UNI EN 14790:2017
- Acetic and formic acid - OSHA ID-186SG 1993 - extension of the method for emissions into the atmosphere
- V.O.S. (expressed as C-tot) - UNI EN 12619-1: 2013
- Non-methane V.O.S. (expressed as C-tot) - UNI EN 12619-1: 2013
- Methane - UNI EN 12619-1: 2013
- Volatile organic substances - UNI EN 13649: 2015 - Analysis in GC/MS
- Total aldehydes - EPA - TO 11/A second edition EPA/625/R 96/010b
- Odorous substances - UNI EN 13725 (Dynamic olfactometry) - determination with n.2 bags providing individual values and arithmetic average.

In particular, comparison tests between tiles were performed according to the previous methods and decorated with traditional ink having the formula indicated with A in the following table, and tiles made according to the previous methods but decorated with ink of the new family having formula B.

| | Formula A | Formula B |
|---|---|---|
| | % w/w | % w/w |
| Inorganic pigments | 41 | 41 |
| **dodecyl benzoate** | 0 | 40 |
| Glycol ether (TPnB) | 0 | 15 |
| Esters of fatty acid | 55 | 0 |
| Dispersing agent | 4 | 4 |
| Total | 100 | 100 |

The values contained in this table represent the percentage by weight of each component with respect to the total weight of the ceramic ink.

For each test, the sampling of the emissions was performed for over 30 minutes so as to have representative data.

The raw manufactured artefacts were fired in a single row, therefore for each test about 30 tiles were needed.

Between each test, about 10 raw manufactured artefacts were inserted, free from slip, ink and glaze, continuously, in order to keep the firing conditions unaltered, have no empty spaces and prevent any contamination between one test and the other.

The results of these experimental tests are contained in the following table.

| | | Formula A | Formula B | Δ % |
|---|---|---|---|---|
| Test duration | Min. | 37 | 38 | |
| Normal cubic meters per hour (Nm³/h) | Nm³/h | 3930 | 3800 | |
| Gas temperature (°C) | °C | 105.5 | 112 | |
| Oxygen (O₂) | % | 20.25 | 20.4 | |
| Carbon dioxide (CO₂) | % | 0.6 | 0.6 | |
| Acetic acid | mg/Nm³ | 0.83 | 0.02 | -98 |
| Formic acid | mg/Nm³ | 0.315 | 0.02 | -94 |
| V.O.S. (expressed as C-Tot) | mg/Nm³ | 35 | 33.4 | |
| Non-methane V.O.S. (expressed as C-Tot) | mg/Nm³ | 20.9 | 18.2 | -13 |
| Methane | mg/Nm³ | 14.1 | 15.2 | |
| Aldehydes and compounds | mg/Nm³ | 3.75 | 0.8 | -79 |
| Formaldehyde | mg/Nm³ | 2.55 | <0.1 | -96 |
| Volatile Organic Substances | mg/Nm³ | 25.6 | 21.1 | -18 |
| Odorous substances | | | | |
| 1st bag | ouE/m³ | 2588.5 | 905 | |
| 2nd bag | ouE/m³ | 1852 | 770 | |
| Average | ouE/m³ | 2220.25 | 838 | -62 |

From the previous table it can be clearly appreciated how the new ceramic ink (having formula B) guarantees, with respect to traditional ceramic ink (having formula A), a substantial reduction in pollutant emissions in terms of volatile organic substances (V.O.S.), aldehydes and compounds, formaldehyde and odorous substances.

### Second test method

The second test method involved measuring the emissions into the atmosphere generated while firing the tiles in an electric roller ceramic kiln with a length of 2 m.

The tiles were created starting from raw manufactured artefacts of porcelain stoneware, pressed and having dimensions of about 20x20 cm.

The raw manufactured artefacts at the temperature of about 70°C, were glazed with an airbrush taking care to apply 350-400g/m² of classic porcelain stoneware slip with density 1500 g/l and residue 1.

Then, ceramic ink was applied to the entire surface of the raw manufactured artefacts with a digital inkjet ceramic printer (with Xaar GS12 heads) for a total quantity of 62 ± 2g/m².

Then, the raw manufactured artefacts were glazed again with an airbrush applying a transparent classic coating glaze for porcelain stoneware in the amount of about 120g/m². Finally, the pieces were placed in the electric roller kiln with a firing curve set to 600°C for 60 minutes.

The emissions into the atmosphere were characterized by performing the following analyses:
- V.O.S. (expressed as C-tot) - UNI EN 12619-1:2013
- Total aldehydes - EPA - TO 11/A second edition EPA/625/R 96/010b
- Odorous substances - UNI EN 13725:2014-determination with 1 bag

In this case, comparison tests were performed between the tiles made according to the previous methods and decorated with traditional ink having the formula indicated with C in the following table, tiles made according to the previous methods but decorated with ink from the new family and having formula B (already used previously), and furthermore tiles made according to the previous methods but decorated with an ink from the new family and having formula D.

| | Formula C | Formula B | Formula D |
|---|---|---|---|
| | % w/w | % w/w | % w/w |
| Inorganic pigment | 45 | 41 | 41 |
| **dodecyl benzoate** | 0 | 40 | 0 |
| **Phenoxyethyl ester** | 0 | 0 | 55 |
| Glycol ether (TPnB) | 0 | 15 | 0 |
| Esters of fatty acid | 51 | 0 | 0 |
| Dispersing agent | 4 | 4 | 4 |
| Total | 100 | 100 | 100 |

Also in this case, the values contained in this table represent the percentage by weight of each component with respect to the total weight of the ceramic ink.

For each test, the sampling of the emissions was performed for over 30 minutes so as to have representative data.

The raw manufactured artefacts were fired in a single row, therefore for each test about 8 tiles were needed.

Between each test, about 3 raw manufactured artefacts were inserted, free from slip, ink and glaze, continuously, in order to keep the firing conditions unaltered, have no empty spaces and prevent any contamination between one test and the other.

The results of these experimental tests are contained in the following tables.

| | | Formula C | Formula B | Δ % |
|---|---|---|---|---|
| V.O.S. (expressed as C-Tot) | mg/Nm³ | 27±3 | 17±3 | -37 |
| Odorous substances | ouE/m³ | 2600 | 2200 | -15 |
| Aldehydes and compounds | mg/Nm³ | 3.7 | 3.3 | -11 |
| Formaldehyde | mg/Nm³ | 0.51 | 0.46 | -10 |

| | | Formula C | Formula D | Δ % |
|---|---|---|---|---|
| V.O.S. (expressed as C-Tot) | mg/Nm³ | 27±3 | 17±3 | -37 |
| Odorous substances | ouE/m³ | 2600 | 1200 | -54 |

These tables demonstrate how the new ceramic inks (formulation B and D) are able to significantly reduce pollutant emissions in terms of volatile organic substances (V.O.S.) and odorous substances, like aldehydes and compounds and formaldehyde.

### Third test method

As the third test method, the thermal behaviour of the ceramic ink was tested, through the following analyses:
- differential thermal analysis (DTA) and thermogravimetric analysis (TGA);
- quantitative determination of formaldehyde by titration;
- odours through fume collection in a mylar bag and qualitative assessment of the odours. In order to perform the TGA-DTA analysis, some mg of ceramic ink were weighed inside a platinum crucible, which was resting on the rods of a thermobalance.

The analysis was performed in parallel to that of a reference sample. In this case it is powdered alumina placed inside a platinum crucible analogous to that of the sample to be analysed.

The thermal cycle applied is heating in a continuous ramp at 20°C/minute to 600°C. During this cycle the thermogravimetric analysis and the differential thermal analysis were performed simultaneously and the gases emitted were collected in the Mylar bags, which were then cooled to room temperature for the odorimetric assessment.

Also for this investigation activity, comparative tests were performed between a ceramic ink of the traditional type having formula A with a ceramic ink of the new family and having formula B (already used previously but also provided below for simplicity purposes).

| | Formula A | Formula B |
|---|---|---|
| | % w/w | % w/w |
| Inorganic pigments | 41 | 41 |
| **dodecyl benzoate** | 0 | 40 |
| Glycol ether (TPnB) | 0 | 15 |
| Esters of fatty acid | 55 | 0 |
| Dispersing agent | 4 | 4 |
| Total | 100 | 100 |

The results of the TGA and DTA thermal analyses performed on traditional ink having formula A are provided in the following graph:

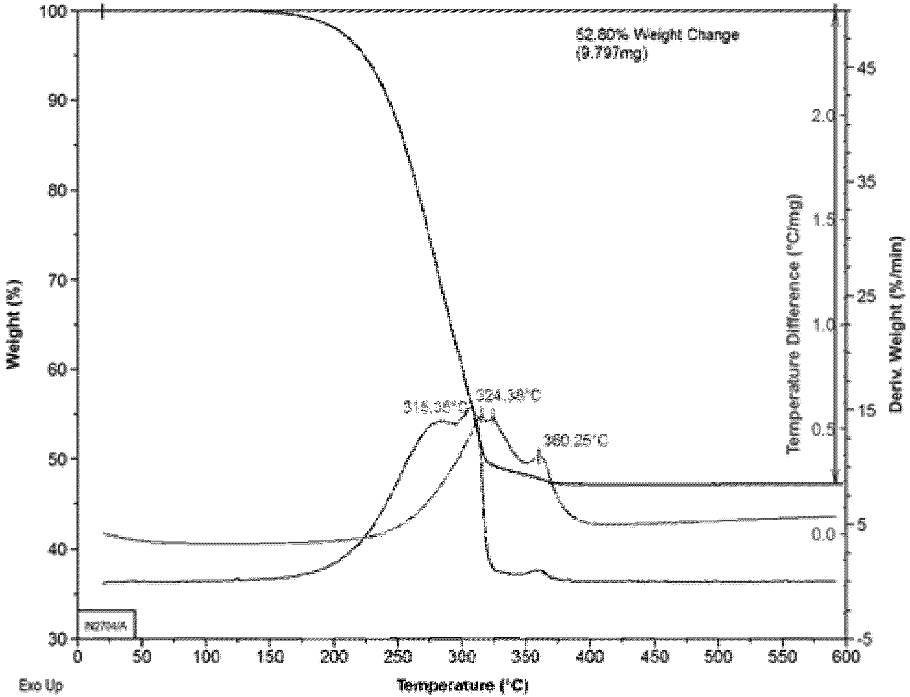

The results of the TGA and DTA thermal analyses performed on the new ink having the innovative formula B are instead provided in the following graph:

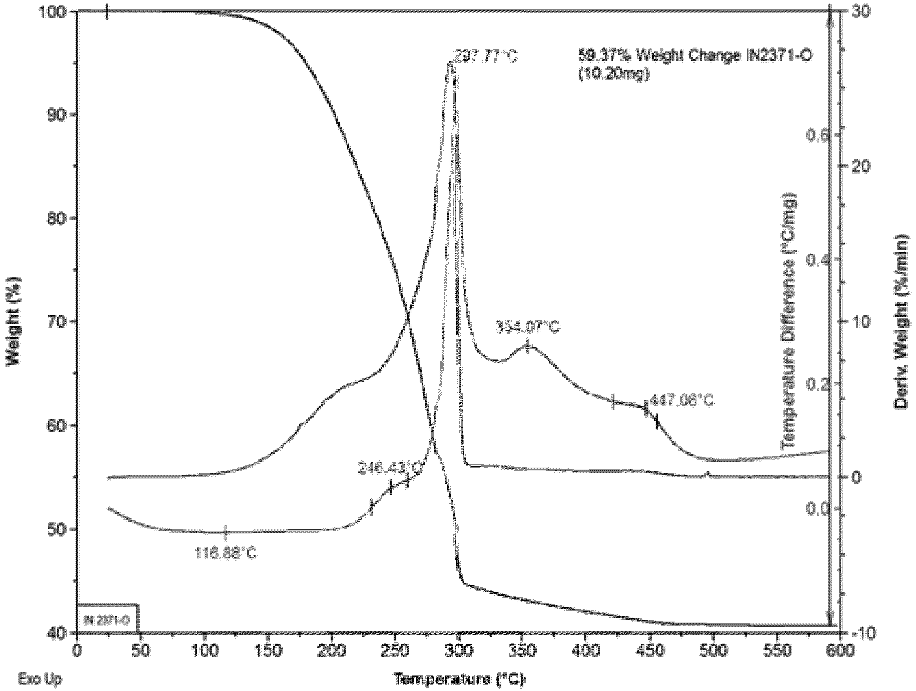

Both analyses can also be summarized in the table provided below:

| | **Formula A** | **Formula B** |
|---|---|---|
| Weight loss (%) | 52.80 | 59.37 |
| Endothermic reactions (°C) | 0 | 116.88 |
| Exothermic reactions (°C) | 315.35 | 246.43 |
| | 324.38 | 297.77 |
| | 360.25 | 354.07 |
| | | 447.08 |

As can be noted from the previous graphs and table, the combustion of the ink having formula B takes place more energetically (0.7°C/mg), as it has a more intense exothermic peak with respect to ink having formula A (max 0.55°C/mg).

The derivative of the weight loss further indicates that with formula B a greater weight loss % per minute is obtained, about 27% less with respect to 15%/min of formula A, demonstrating that the new ceramic ink burns more quickly and more completely.

If the percentage of dry part is considered, which for both ceramic inks is equal to 41, the ceramic ink according to formula B loses all the organic part whereas the ink of formula A doesn't.

These factors support the experimental data observed with the two test methods and indicate that the esters derived from benzoic acid generate more energetic and rapid combustion, therefore more inclined to take place completely, producing CO₂ rather than intermediate organic compounds.

In relation to formaldehyde emissions and the qualitative assessment of the odours, the experimental tests performed according to the third method produced the following results:

| | **Formula A** | **Formula B** |
|---|---|---|
| Estimated emission of formaldehyde in the chimney (mg/m³) | 15 | 5 |
| Perceived odour at room temperature | Average | Light |

confirming how the ink having innovative formula B is effectively able to reduce the emissions of formaldehyde and odorous substances with respect to ink having the traditional formula A.

## Claims

1. A ceramic ink comprising a suspension consisting essentially of a solid inorganic fraction dispersed in a liquid organic fraction, **characterised in that** the liquid organic fraction comprises:
a first component consisting of an ester derived from benzoic acid or from a mixture of esters derived from benzoic acid, and/or
a second component consisting of an ester derived from phenoxyethanol alcohol or a mixture of esters derived from phenoxyethanol alcohol.

2. A ceramic ink according to claim 1, wherein the ester/s derived from benzoic acid forming the first component is/are selected from the group consisting of:
• dodecyl benzoate,
• butyl benzoate,
• propyl benzoate,
• ethyl benzoate,
• methyl benzoate,
• 3,7-dimethyl-1,6-octadien-3-yl benzoate,
• 2-phenylethyl benzoate,
• phenyl benzoate,
• benzyl benzoate.

3. A ceramic ink according to claims 1 and 2, wherein said first component has a weight percent between 10 and 90 percent based on the total weight of the ceramic ink, and/or between 25 and 100 percent, based on the weight of the liquid organic fraction.

4. A ceramic ink according any of the preceding claims, wherein the ester/s derived from phenoxyethanol alcohol acid forming the second component is/are selected from the group consisting of:
• phenoxyethyl ester,
• 1-phenoxyethyl acetate,
• 1-phenoxyethyl acrylate,
• 2-phenoxyethyl octanoate,
• 2-phenoxyethyl propionate,
• 2-phenylethyl 2-methylpropanoate.

5. A ceramic ink according any of the preceding claims, wherein said second component has a weight percent between 10 and 90 percent based on the total weight of the ceramic ink, and/or between 25 and 100 percent, based on the weight of the liquid organic fraction.

6. A ceramic ink according any of the preceding claims, wherein the liquid organic fraction includes an additional component consisting of a substance or of a mixture of substances selected from the group consisting of:
• glycols,
• glycol ethers,
• esters derived from fatty acids
• paraffins,
• naphthenes.

7. A ceramic ink according to claim 6, wherein said additional component has a weight percent lower or equal to 40 percent, based on the total weight of the ceramic ink.

8. A ceramic ink according any of the preceding claims, also comprising one or more chemical additives selected from the group consisting of:
• dispersants,
• suspending agents,
• surfactants,
• defoamers.

9. A ceramic ink according to claim 8, wherein each of said chemical additives has a weight percent lower or equal to 10 percent, based on the total weight of the ceramic ink.

10. A ceramic ink according any of the preceding claims, wherein said solid inorganic fraction comprises one or more components selected from the group consisting of:
• calcines,
• coloured calcines,
• inorganic pigments,
• frits,
• inorganic oxides,
• refractory inorganic oxides.

11. A ceramic ink according any of the preceding claims, wherein the solid inorganic fraction has a weight percent between 5 and 55 percent, based on the total weight of the ceramic ink.

12. A ceramic ink according any of the preceding claims, wherein the solid inorganic fraction consists essentially of an incoherent mass of solid particles with an average diameter lower than 1.5 µm.

13. A method for decorating a ceramic object, comprising the step of applying on at least one surface (110) of said ceramic object a ceramic ink according to any of the preceding claims.

14. A method according to claim 13, wherein the ceramic ink is applied with a digital inkjet ceramic printer (210).

15. A method according to claims 13 or 14, wherein the ceramic object is a raw manufactured artefact (105) made of pressed ceramic powders.

16. A method according any of claims from 13 to 15, comprising the step of applying a ceramic engobe on said surface (110) of the ceramic object before the step of applying the ceramic ink.

17. A method according to any of claims from 13 to 16, comprising the step of applying a coating ceramic glaze on said surface (110) of the ceramic object after the step of applying the ceramic ink.

18. Use of a ceramic ink according any of claims from 1 to 12 for decorating a ceramic object.

19. Use of a ceramic ink according any one of claims from 1 to 12 in a digital inkjet ceramic printer (210).

## Patentansprüche

1. Keramische Tinte, welche eine Suspension umfasst, die im Wesentlichen aus einer festen anorganischen Fraktion besteht, die in einer flüssigen organischen Fraktion dispergiert ist, **dadurch gekennzeichnet, dass** die flüssige organische Fraktion umfasst:
einen ersten Bestandteil, der einen Ester umfasst, welcher von Benzoesäure stammt oder von einem Gemisch aus Estern von Benzoesäure, und/oder
einen zweiten Bestandteil, der einen Ester umfasst, welcher von Phenoxyethanol Alkohol stammt oder von einem Gemisch aus Estern von Phenoxyethanol Alkohol.

2. Keramische Tinte gemäß Patentanspruch 1, wobei der/die Ester von Benzoesäure, welche/r den ersten Bestandteil bildet/bilden, aus der Gruppe ausgewählt wird/werden, welche umfasst:
• Dodecylbenzoat,
• Butylbenzoat,
• Propylbenzoat,
• Ethylbenzoat,
• Methylbenzoat,
• 3,7-Dimethyl-1,6-Octadien-3-yl Benzoat
• 2-Phenylethylbenzoat,
• Phenylbenzoat,
• Benzylbenzoat.

3. Keramische Tinte gemäß Patentansprüchen 1 und 2, wobei der erste Bestandteil ein Gewichtsprozent zwischen 10 und 90 Prozent aufweist, basierend auf dem Gesamtgewicht der keramischen Tinte, und/oder zwischen 25 und 100 Prozent, basierend auf dem Gewicht der flüssigen organischen Fraktion.

4. Keramische Tinte gemäß einem der voranstehenden Ansprüche, wobei der/die Ester von Phenoxyethanol Alkohol, welche/r den zweiten Bestandteil bildet/bilden, aus der Gruppe ausgewählt wird/werden, welche umfasst:
• Phenoxyethyl Ester
• 1-Phenoxyethyl Acetat,
• 1-Phenoxyethyl Acrylat,
• 2-Phenoxyethyl Oktanoat,
• 2-Phenoxyethyl Propionate,
• 2-Phenylethyl 2-Methylpropanoat.

5. Keramische Tinte gemäß einem der voranstehenden Ansprüche, wobei der zweite Bestandteil ein Gewichtsprozent zwischen 10 und 90 Prozent aufweist, basierend auf dem Gesamtgewicht der keramischen Tinte, und/oder zwischen 25 und 100 Prozent, basierend auf dem Gewicht der flüssigen organischen Fraktion.

6. Keramische Tinte gemäß einem der voranstehenden Ansprüche, wobei die flüssige organische Fraktion einen zusätzlichen Bestandteil enthält, bestehend aus einem Stoff oder einem Stoffgemisch, der/das aus der Gruppe ausgewählt wird, welche umfasst:
• Gylcole,
• Gylcolether,
• Ester von Fettsäuren,
• Paraffine,
• Naphthene.

7. Keramische Tinte gemäß Patentansprüchen 6, wobei der zusätzliche Bestandteil ein Gewichtsprozent aufweist, das kleiner oder gleich 40 Prozent ist, basierend auf dem Gesamtgewicht der keramischen Tinte.

8. Keramische Tinte gemäß einem der voranstehenden Ansprüche, die auch eine oder mehrere chemische Zusatzstoffe enthält, ausgewählt aus der Gruppe, welche umfasst:
• Dispergiermittel,
• Stellmittel,
• Tenside,
• Entschäumer.

9. Keramische Tinte gemäß Patentansprüchen 8, wobei jeder der chemischen Zusatzstoffe ein Gewichtsprozent aufweist, das kleiner oder gleich 10 Prozent ist, basierend auf dem Gesamtgewicht der keramischen Tinte.

10. Keramische Tinte gemäß einem der voranstehenden Ansprüche, wobei die feste anorganische Fraktion einen oder mehrere Bestandteile enthält, ausgewählt aus der Gruppe, welche umfasst:
• kalzinierte Gemenge,
• gefärbte kalzinierte Gemenge,
• anorganische Pigmente,
• Fritte,
• anorganische Oxide,
• feuerfeste anorganische Oxide.

11. Keramische Tinte gemäß einem der voranstehenden Ansprüche, wobei die feste anorganische Fraktion ein Gewichtsprozent zwischen 5 und 55 Prozent aufweist, basierend auf dem Gesamtgewicht der keramischen Tinte.

12. Keramische Tinte gemäß einem der voranstehenden Ansprüche, wobei die feste anorganische Fraktion im Wesentlichen aus einer inkohärenten Masse aus festen Partikeln mit einem durchschnittlichen Durchmesser kleiner als 1,5 pm besteht.

13. Methode für das Dekorieren eines Keramikgegenstands, welche den Schritt des Aufbringens einer keramischen Tinte gemäß einem der voranstehenden Ansprüche auf mindestens eine Oberfläche (110) des Keramikgegenstands umfasst.

14. Methode gemäß Patentanspruch 13, wobei die keramische Tinte mit einem digitalen Tintenstrahldrucker für Keramik (210) aufgebracht wird.

15. Methode gemäß Patentanspruch 13 oder 14. wobei es sich bei dem Keramikgegenstand um einen rohen hergestellten Gegenstand (105) handelt, der aus gepresstem Keramikpulver besteht.

16. Methode gemäß einem der Patentansprüche 13 bis 15, welche den Schritt des Aufbringens einer keramischen Engobe auf die Oberfläche (110) des Keramikgegenstands vor dem Schritt der Aufbringung der keramischen Tinte umfasst.

17. Methode gemäß einem der Patentansprüche 13 bis 16, welche den Schritt des Aufbringens einer Beschichtung aus keramischer Glasur auf die Oberfläche (110) des Keramikgegenstands nach dem Schritt der Aufbringung der keramischen Tinte umfasst.

18. Verwendung einer keramischen Tinte gemäß einem der Patentansprüche 1 bis 12 für das Dekorieren eines Keramikgegenstands.

19. Verwendung einer keramischen Tinte gemäß einem der Patentansprüche 1 bis 12 in einem digitalen Tintenstrahldrucker für Keramik (210).

## Revendications

1. Encre céramique comprenant une suspension constituée essentiellement d'une fraction inorganique solide dispersée dans une fraction organique liquide, **caractérisée en ce que** la fraction organique liquide comprend :
un premier composant constitué d'un ester dérivé de l'acide benzoïque ou d'un mélange d'esters dérivés de l'acide benzoïque, et/ou
un deuxième composant constitué d'un ester dérivé de l'alcool phénoxyéthanol ou d'un mélange d'esters dérivés de l'alcool phénoxyéthanol.

2. Encre céramique selon la revendication 1, dans laquelle le ou les esters dérivés de l'acide benzoïque formant le premier composant est/sont choisis dans le groupe constitué de :
• dodécyl benzoate,
• benzoate de butyle,
• benzoate de propyle,
• benzoate d'éthyle,
• benzoate de méthyle,
• 3,7-diméthyl-1,6-octadien-3-yl benzoate,
• 2-phénylethyl benzoate,
• benzoate de phényle,
• benzoate de benzyle.

3. Encre céramique selon les revendications 1 et 2, dans laquelle ledit premier composant a un pourcentage en poids compris entre 10 et 90 pour cent par rapport au poids total de l'encre céramique, et/ou entre 25 et 100 pour cent, par rapport au poids de la fraction organique liquide.

4. Encre céramique selon l'une quelconque des revendications précédentes, dans laquelle le ou les esters dérivés de l'acide d'alcool phénoxyéthanol formant le deuxième composant est/sont choisis dans le groupe constitué de :
• l'ester phénoxyéthyle,
• 1-phénoxyéthyl acétate,
• 1-phénoxyéthyl acrylate,
• 2-phénoxyéthyl octanoate,
• 2-phénoxyéthyl propionate,
• 2-phényléthyl 2-méthylpropanoate.

5. Encre céramique selon l'une quelconque des revendications précédentes, dans laquelle ledit deuxième composant a un pourcentage en poids compris entre 10 et 90 pour cent par rapport au poids total de l'encre céramique, et/ou entre 25 et 100 pour cent, par rapport au poids de la fraction organique liquide.

6. Encre céramique selon l'une quelconque des revendications précédentes, dans laquelle la fraction organique liquide comprend un composant supplémentaire constitué d'une substance ou d'un mélange de substances choisies dans le groupe constitué de :
• glycols,
• éthers de glycols,
• esters dérivés d'acides gras,
• paraffines,
• naphtènes.

7. Encre céramique selon la revendication 6, dans laquelle ledit composant supplémentaire a un pourcentage en poids inférieur ou égal à 40 pour cent, sur la base du poids total de l'encre céramique.

8. Encre céramique selon l'une quelconque des revendications précédentes, comprenant également un ou plusieurs additifs chimiques choisis dans le groupe constitué :
• de dispersants,
• d'agents de suspension,
• de tensioactifs,
• d'antimousses.

9. Encre céramique selon la revendication 8, dans laquelle chacun desdits additifs chimiques a un pourcentage en poids inférieur ou égal à 10 pour cent, sur la base du poids total de l'encre céramique.

10. Encre céramique selon l'une quelconque des revendications précédentes, dans laquelle ladite fraction inorganique solide comprend un ou plusieurs composants choisis dans le groupe constitué :
• de calcine,
• de calcines colorées,
• de pigments inorganiques,
• de fritte,
• d'oxydes inorganiques,
• d'oxydes inorganiques réfractaires.

11. Encre céramique selon l'une quelconque des revendications précédentes, dans laquelle la fraction solide inorganique a un pourcentage en poids compris entre 5 et 55 pour cent, sur la base du poids total de l'encre céramique.

12. Encre céramique selon l'un quelconque des revendications précédentes, dans laquelle la fraction inorganique solide consiste essentiellement en une masse incohérente de particules solides ayant un diamètre moyen inférieur à 1,5 µm.

13. Procédé de décoration d'un objet en céramique, comprenant l'étape consistant à appliquer sur au moins une surface (110) dudit objet en céramique une encre céramique selon l'une quelconque des revendications précédentes.

14. Procédé selon la revendication 13, dans lequel l'encre céramique est appliquée avec une imprimante céramique numérique à jet d'encre (210).

15. Procédé selon les revendications 13 ou 14, dans lequel l'objet en céramique est un artefact fabriqué brut (105) fait de poudres céramiques pressées.

16. Procédé selon l'une quelconque des revendications 13 à 15, comprenant l'étape consistant à appliquer un engobe céramique sur ladite surface (110) de l'objet en céramique avant l'étape consistant à appliquer l'encre céramique.

17. Procédé selon l'une quelconque des revendications 13 à 16, comprenant l'étape consistant à appliquer une glaçure céramique de revêtement sur ladite surface (110) de l'objet en céramique après l'étape consistant à appliquer l'encre céramique.

18. Utilisation d'une encre céramique selon l'une quelconque des revendications 1 à 12 pour décorer un objet en céramique.

19. Utilisation d'une encre céramique selon l'une quelconque des revendications 1 à 12 dans une imprimante céramique numérique à jet d'encre (210).
